# FASCICULE DE BREVET EUROPEEN

(11) **EP 3 071 746 B1**
(45) Date de publication et mention de la délivrance du brevet: **30.05.2018**
(21) Numéro de dépôt: 14821713.6
(22) Date de dépôt: 17.11.2014
(51) Int. Cl.: D06M 11/83, D06M 15/564, D06M 15/59, D06M 15/507, D06M 15/19, A47H 21/00, C03C 25/10, C03C 25/30, C03C 25/32, D06P 3/80

(54) **TEXTILES METALLISES ET LEUR PROCEDE DE FABRICATION**
METALLISIERTE TEXTILE UND VERFAHREN ZUR HERSTELLUNG
METALLIZED TEXTILES AND PROCESS OF PRODUCTION

(30) Priorité: 18.11.2013 FR 1361257
(43) Date de publication de la demande: 28.09.2016
(73) Titulaire: Mermet, 38630 Veyrins Thuellin (FR)
(72) Inventeur: CROUZET, Alain, F-38660 Le Touvet (FR); DAMOUR, François-Xavier, F-69004 Lyon (FR)
(74) Mandataire: Sarlin, Laure V.
(86) Numéro de dépôt international: PCT/FR2014/052928
(87) Numéro de publication internationale: WO 2015/071615

(56) Documents cités:
- FR-A1- 2 791 353
- GB-A- 2 138 032
- JP-A- H 059 829
- JP-A- H07 102 380

## Description

La présente invention concerne le domaine technique des textiles adaptés à la protection solaire. Plus précisément, la présente invention concerne de nouveaux textiles métallisés et leur procédé de fabrication.

Les performances des toiles de protection solaire sont, notamment, caractérisées par des indices thermiques, qui caractérisent la partie transmise (Ts) et la partie réfléchie (Rs) du rayonnement solaire. Plus la valeur de Rs est élevée, plus le store est performant. Cette valeur de Rs est essentiellement fonction de l'état de la surface extérieure du store. Il est généralement admis que des valeurs de Rs de l'ordre de 70% représentent les valeurs maximales atteignables pour les produits actuellement disponibles sur le marché.

Une autre caractéristique importante des toiles de protection solaire est leur résistance au feu. Ce comportement au feu est caractérisé par différents tests normalisés. En France, le comportement au feu est, entre autre, évalué à l'aide de la norme NFP 92507, qui permet l'obtention d'un classement « M ». Pour les toiles de protection solaire, le niveau M0 ou le niveau M1 sont généralement requis. La norme européenne EN 13.501-1 permet également de définir un classement, connu sous le nom d'EUROCLASSE, de la résistance au feu pour les matériaux souples. Le niveau de classement recherché est A2s1d0.

Actuellement, deux techniques sont principalement connues pour conduire à une valeur de 70% de Rs, pour des toiles de protection solaire.

La première utilise un dépôt métallique sur la face extérieure du store. Plusieurs technologies permettent de réaliser un tel dépôt métallique :
- Le dépôt d'un liant contenant une charge métallique, notamment aluminisée. Dans ce cas, le liant, qui est de nature organique, sera combustible. De plus, la recherche de l'aspect métallisé interdit l'incorporation d'agents ignifugeants dans la formulation de dépôt. Il ne sera donc pas possible d'obtenir un tissu présentant un niveau d'ignifugation de type M0 ou A2s1d0 sur la face métallisée d'un tel tissu. Le niveau M1 peut néanmoins être atteint en utilisant des composés halogénés.
- La pulvérisation d'un spray obtenu par dispersion de fines particules métalliques, telles que des particules d'aluminium, dans un liant généralement de type polymère. Comme pour le cas précédent, l'utilisation d'un liant organique, comme milieu de dispersion des particules métalliques, ne permet pas l'obtention d'un niveau d'ignifugation de type M0, ou A2s1d0 sur la face métallisée du tissu. Le niveau M1 n'est accessible que pour des produits fortement halogénés et ignifugés (par exemple des PVC avec ignifugation à base de trioxyde d'antimoine et hydroxystannate de zinc).
- Le dépôt d'un film transfert composé d'une couche d'aluminium et d'un liant polymère à la surface du tissu. Comme dans les deux cas précédents, la présence d'un liant organique empêche l'obtention d'un classement M0 ou A2s1d0 et le classement M1 ne peut être atteint qu'avec des composés halogénés.
- Le dépôt d'une couche d'aluminium sur la surface du tissu par une opération de métallisation sous vide. Contrairement aux technologies précédemment décrites, ce mode de dépôt permet de recouvrir le tissu d'une couche d'aluminium pur. Le point délicat de cette technologie est l'accroche de la couche métallique à la surface du textile. A ce jour, les solutions utilisées pour résoudre ce défaut d'adhésion conduisent à la mise en place d'une enduction organique à l'interface, permettant d'assurer la liaison entre l'âme textile et la couche métallique. Cette couche organique sur la face métallisée du tissu empêchera l'obtention d'un classement du type M0, M1 ou A2s1d0.

La deuxième technique connue pour conduire à une valeur de 70% de Rs, pour des toiles de protection solaire utilise un dépôt d'une couche blanche opaque fortement chargée en pigment blanc, comme du dioxyde de titane de type rutile, du sulfure de zinc ou du sulfate de baryum, sur la surface extérieure. Dans ce cas, l'utilisation d'un composé organique pour assurer la cohésion de la couche, contenant les charges minérales, est nécessaire. Dans ce cas, la présence de ce composé organique empêche l'obtention d'un classement « feu » du type M0 selon la norme NFP 92.507, ou A2s1d0 selon la norme EN 13.501-1, pour la surface textile.

Il n'existe donc pas, à ce jour, de solution technique permettant l'obtention d'un tissu présentant, à la fois, un indice Rs supérieur ou égal à 70%, imposant la présence d'un métal en surface, et un classement au feu de type M0, ou M1 avec une composition sans halogène, selon la norme NFP 92.507, ou A2s1d0 selon la norme EN 13.501-1.

On peut également citer les documents suivants qui se sont intéressés à la production de tissus métallisés. Le document JP H07 102380 décrit un matériau textile en fibres de verre, qui est traité avec une solution contenant à la fois une résine uréthane soluble dans l'eau et un silane amino ou époxy soluble dans l'eau, en tant qu'agent de couplage. Après traitement, le matériau fibreux est séché et soumis à un traitement thermique et ensuite, un film métallique est déposé par dépôt autocatalytique (« electroless plating »). Il est indiqué dans le résumé de ce document que le film métallique ainsi formé présente une amélioration significative en termes de propriétés d'adhésion. Dans ce cas, le polyuréthane utilisé se trouvant en solution aqueuse, le séchage entraîne l'évaporation du solvant, conduisant à la formation d'un film continu qui recouvre intégralement la surface du tissu de verre. Il est précisé dans ce document que le silane est utilisé pour créer une réticulation entre le tissu de verre et le polyuréthane. Par ailleurs, dans ce document, la couche métallique est réalisée par dépôt auto-catalytique, qui n'est pas adaptée au dépôt d'aluminium et conduit à des dépôts épais.

Le document JP H05 9829 décrit, quant à lui, le traitement d'un textile en fibres de verre, réalisé sur chacune de ses faces avec une solution anti- inflammable, contenant du silicate de calcium et une résine uréthane polyester dispersible dans l'eau, suivi d'une métallisation. L'adhésion de métal se fait via le polyuréthane, sans liaison chimique. La concentration en silicate de calcium est présentée comme un point critique pour l'obtention des performances non feu et des propriétés mécaniques du produit. Il est précisé, que s'il y a moins de 40% en poids de silicate de calcium, l'incombustibilité n'est plus garantie et s'il y a plus de 60% en poids de silicate de calcium, il devient impossible de fixer le silicate sur le tissu.

Dans ce contexte, l'invention propose un matériau textile métallisé et un procédé de fabrication d'un tel matériau qui présente une accroche solide de la couche métallique sur la couche textile et qui soit compatible avec l'obtention d'un classement au feu de type M0 ou A2s1d0 ou qui soit exempt d'halogène et compatible avec un classement de type M1.

L'invention concerne un textile métallisé sur au moins l'une de ses faces comportant une couche textile de fibres inorganiques et une couche métallique, caractérisé en ce que la liaison entre la couche textile et la couche métallique est assurée par une couche intermédiaire polymérique formée d'une matrice comportant au moins un polymère de couplage dans laquelle est réparti au moins un agent ignifugeant, ledit polymère de couplage étant lié par liaisons chimiques, d'une part à la couche textile et, d'autre part à la couche métallique.

Dans le cadre de l'invention, des liaisons chimiques sont établis entre les différents composants du textile métallisé. Ces liaisons sont créées par des agents de couplage portés par le polymère constitutif de la couche intermédiaire polymérique. De plus, la couche intermédiaire polymérique établit une séparation entre la couche métallique et la couche textile qui ne sont donc pas au contact l'une de l'autre.

Bien que la métallisation puisse être effectuée sur les deux faces, l'invention est particulièrement adaptée aux textiles métallisés sur une seule de leurs faces. Dans le cadre de l'invention, les liaisons chimiques existant, d'une part entre le polymère de couplage et la couche textile et, d'autre part entre le polymère de couplage et la couche métallique, sont, notamment, des liaisons covalentes, hydrogène ou polaires.

En particulier, les liaisons chimiques existant, d'une part entre le polymère de couplage et la couche textile et, d'autre part entre le polymère de couplage et la couche métallique, sont assurées par l'intermédiaire de fonctions M-OH portées par la couche polymérique ou de ponts covalents O-M-O avec M = Si, Al, Zr ou Ti. De préférence, M = Si.

Selon des modes de réalisation particuliers, la couche intermédiaire polymérique est constituée d'un ou plusieurs polymères à fonctions réactives, notamment choisies parmi les groupements monovalents ou divalents ci-après : hydroxy, acide carboxylique, amine, amide, anhydride d'acide, isocyanate, époxy, caprolactame, carbodiimide. De manière avantageuse, la couche intermédiaire polymérique est en un polymère choisi parmi : les polyesters, polyamides, polyuréthanes, polyoléfines et leurs mélanges. Néanmoins, dans le cadre de l'invention, tous les types de polymère porteurs de fonctions réactives peuvent être utilisés. On peut citer tous les polycondensats (polyester, polyamide, polyuréthane), mais également tous les polymères autoréticulables et également les TPV (polyoléfines obtenues par catalyse métallocène possédant une phase partiellement vulcanisée). Un exemple de TPV est la gamme SARLINK® de TEKNOR APEX. Un tel polymère à fonctions réactives est fonctionnalisé avec au moins un agent de couplage, notamment du type silane, titanate, zirconate, aluminate ou complexe organochromé, comme explicité ci-après pour correspondre au polymère de couplage.

Dans le cadre de l'invention, le textile peut notamment être un tissu, un non-tissé ou une grille, de préférence en fibres de verre.

Par grille, on entend un réseau de fils croisés sans entrelacement, le plus souvent collés entre eux à leurs points d'intersection.

L'invention n'est néanmoins nullement limitée aux textiles en verre, mais peut être étendue à d'autres textiles inorganiques à base d'oxyde, notamment constitués de fibres céramique, de fibres optiques ou de fils à base d'alliages métalliques comme, par exemple, des alliages Fe/Ni 36 ou des matériaux de type nanocristallin. De manière classique, les fibres inorganiques pourront être recouvertes d'un ensimage représentant moins de 0,5% de la masse des fibres.

De manière avantageuse, le métal constitutif de la couche métallique est de l'aluminium. De la même manière, l'invention peut être appliquée à des couches métalliques autres, notamment le textile métallisé peut comprendre, à la place d'une couche d'aluminium, une couche d'un autre métal déposable sous pression réduite, comme le chrome, l'or, l'argent, l'étain ou le nickel, ou encore une couche de métal ayant des propriétés de blindage contre les ondes électromagnétiques, telle qu'une couche d'invar (alliage Fe/Ni 36%) ou de mumétal ou µ-métal (NiFe15Mo5 ou NiFe15Cu5Mo3, notamment).

Selon un mode de réalisation particulier, le ou les agent(s) ignifugeant(s) représente(nt) de 20 à 25% en masse de la masse de la couche intermédiaire polymérique.

Dans le cadre de l'invention, le ou les agent(s) ignifugeant(s) est (sont) intégré(s) dans la matrice polymère constituant la couche intermédiaire polymérique. Les molécules ou particules correspondant à l'agent ignifugeant ne sont pas liées chimiquement à cette matrice mais sont emprisonnées dans cette dernière. Elles peuvent, par contre, selon la nature de la matrice polymère et de l'agent ignifugeant, se lier par des liaisons de faible énergie, comme des liaisons de covalence ou des liaisons hydrogène, à la matrice polymère. Il est possible d'utiliser un seul ou un mélange d'agents ignifugeants.

Le ou les agent(s) ignifugeant(s) pourront être du type phosphorés ou azotés comme les polyphosphates d'ammonium, l'isocyanurate de mélamine, les dérivés de pentaérythritol et de mélamine ou des molybdates d'ammonium.

De manière préférée, le polymère de couplage représente de 1 à 25 %, et de préférence de 5 à 6 %, en masse de la masse totale du textile métallisé.

De manière avantageuse, les textiles métallisés selon l'invention présentent un indice Rs supérieur ou égal à 70%. L'indice Rs peut être déterminé par la norme EN 410. Un tel Rs peut être atteint grâce à l'obtention d'une excellente réflexion liée à la présence de la couche métallique de surface et au choix d'un faible facteur d'ouverture, notamment de l'ordre de 0 à 8%, et de préférence inférieur à 7%.

La présente invention a également pour objet un procédé de fabrication d'un textile métallisé défini dans le cadre de l'invention comprenant les étapes successives suivantes :
a) Préparation d'une solution ou d'une dispersion comportant au moins un agent ignifugeant et un polymère de couplage ou un mélange de polymères de couplage, le(s)dit(s) polymère(s) étant porteur(s) de fonctions de couplage capables de réaliser des liaisons chimiques entre le polymère et les fibres textiles inorganiques et des fonctions de couplage capables de réaliser des liaisons chimiques entre le polymère et le métal, ces fonctions pouvant être identiques ou différentes,
b) Ensimage de l'une des faces de la couche textile de fibres inorganiques avec la solution ou la dispersion préparée à l'étape a),
c) Application d'un traitement thermique permettant notamment de fixer chimiquement le polymère de couplage à la surface de la couche textile, de manière à fixer une couche de polymère intermédiaire sur la couche textile,
d) Métallisation, par dépôt de vapeurs de métal sous pression réduite, d'au moins une partie de la surface précédemment traitée, entraînant la formation de liaisons chimiques entre la couche de polymère intermédiaire et la couche métallique formée.

En fonction de la nature du polymère, la préparation utilisée pour réaliser l'ensimage, nommée préparation de dépôt, pourra être réalisée en dispersion aqueuse ou en solution aqueuse ou en dispersion dans un solvant organique tel qu'un alcool, une cétone...

Les composants de la préparation de dépôt du polymère sont :
- Un liant polymère possédant des fonctions réactives,
- Un agent de couplage chargé d'assurer la liaison « textile / polymère »,
- Un agent de couplage chargé d'assurer la liaison « polymère / métal » et
- Un agent ignifugeant, par exemple de type phosphore et/ou azoté.

Il est possible d'utiliser un agent de couplage pour réaliser la liaison « textile / polymère » identique ou différent à celui utilisé pour réaliser la liaison « polymère / métal ».

Les agents de couplage peuvent être des silanes, titanates, zirconates, aluminates ou des complexes organochromés .

A titre d'exemples de titanates ou zirconates, on peut citer les composés de formule (XO)ₙZ(OY)₄₋ₙ où X est un groupement alkyle, par exemple n-propyle, iso-propyle, n-butyle, iso-octyléthyle, Y est un groupement organo fonctionnel, par exemple du type carboxyle, ester, phosphonato, pyro-phosphonato, sulfonato et Z est Ti dans le cas des titanates ou Zr dans le cas des zirconates et m compris entre 1 et 3. Des gammes complètes dédiées à chaque type de polymère sont disponibles auprès des fournisseurs Famas technology, Capatue Chemical, ...

De manière préférée, les agents de couplage sont des organosiianes porteurs de une à trois fonctions OH ou alcoxy, et d'au moins une partie organique R possédant une fonction permettant leur greffage covalent sur le polymère. Ils seront le plus souvent des organosilanes porteurs de une à trois fonctions OH ou alcoxy (qui vont s'hydrolyser en milieu aqueux pour former des fonctions OH), dont la formule peut se schématiser par (R'O)ₘ-Si(R)₄₋ₘ avec m compris entre 1 et 3, R' qui peut être H ou un groupe alkyle, notamment de 1 à 4 atomes de carbone. Il est possible qu'un même atome de silicium soit porteur de différents groupements OR' et/ou R. Au moins une des parties organiques R possède une fonction permettant le greffage sur le polymère. Le choix de cette fonction dépend donc de la nature du polymère et des fonctions réactives portées par ce dernier. Par exemple, si le polymère est un polyuréthane, la partie organique R contiendra une fonction amine ou époxy. Des gammes complètes d'organosilanes dédiées à chaque type de polymère sont disponibles auprès des fournisseurs Dow Corning, Wacker, Momentive et Shin-Etsu. Les liaisons chimiques avec les composés inorganiques (fibres et métal) pourront ensuite, se faire par l'intermédiaire des fonctions OH portées par l'atome de Si, restées libres sur le polymère.

Lors de l'opération de préparation du bain, les agents de couplage vont réagir sur certaines des fonctions réactives du polymère pour conduire à la formation d'un polymère modifié permettant un couplage chimique avec la couche textile et la couche métallique. Ce « polymère de couplage » est, de façon avantageuse, utilisé à de très faible teneur, notamment pour représenter de l'ordre de 5 à 6% en masse du textile métallisé final. La présence d'un ignifugeant permet de pallier à la dégradation des propriétés non feu liées à la présence de composés organiques.

De manière avantageuse, la préparation de dépôt préparée à l'étape a) est réalisée avec de 1 à 10% d'agent(s) de couplage, 50 à 80% de polymère(s) à fonctions réactives, de 5 à 40% d'agent(s) ignifugeant(s) et de 0,1 à 10% d'agent(s) de formulation, ces pourcentages étant donnés sur l'extrait sec, par rapport à la masse totale de l'extrait sec correspondant à la préparation de dépôt. De préférence, la préparation de dépôt préparée à l'étape a) est réalisée avec de 1 à 5% d'agent(s) de couplage, 70 à 80% de polymère(s), de 15 à 25% d'agent(s) ignifugeant(s) et de 0,1 à 1% d'agent(s) de formulation, ces pourcentages étant donnés sur l'extrait sec, par rapport à la masse totale de l'extrait sec correspondant à la préparation de dépôt. On pourra introduire tout type d'agents de formulation classiquement utilisés dans les dépôts polymériques, par exemple du type agent anti-mousse, agent mouillant...

De façon à garantir une répartition homogène de l'agent ignifugeant se présentant en général sous la forme de particules, une agitation sera, de préférence, opérée sur la préparation de dépôt, avant son application.

De manière avantageuse, la préparation de dépôt contient un agent anti-mousse. On pourra utiliser tout agent anti-mousse classique bien connu de l'homme du métier et de façon avantageuse, ceux de la famille des polysiloxanes et notamment le BYK TM -094 commercialisé par BYK Chemie, ou de la famille des copolymères polyéther siloxane et notamment le TEGO TM Foamex 825 commercialisé par la société DEGUSSA.

La préparation de dépôt du polymère est ensuite appliquée sur une couche textile déjà constituée.

L'application de la préparation de dépôt du polymère peut être réalisée par toutes techniques classiques de traitement de matériau textile, nommées classiquement ensimage : imprégnation plein bain suivi d'un essorage au foulard, enduction à la racle, pulvérisation... Les techniques permettant de déposer la couche polymérique sur une seule des faces du textile seront privilégiées. Il est possible d'utiliser un procédé de dépôt suivi d'un foulardage. Le foulardage permet l'élimination de l'excès de polymère sur rouleaux (nommés foulards dans le langage de l'homme du métier).

Le traitement thermique qui suit a deux objectifs : permettre l'élimination du milieu dispersif ou du solvant utilisé dans la préparation de dépôt de polymère et permettre l'activation des fonctions de couplage pour conduire aux liaisons chimiques souhaitées. Ces fonctions de couplage, notamment du type OH, viennent de l'agent de couplage notamment choisi parmi les silanes, titanates, zirconates, aluminates et complexes organochromés qui après liaison au polymère ont permis de former le polymère de couplage. Le traitement thermique permet, tout d'abord, d'établir la liaison entre la couche polymérique et le textile. Il peut également entraîner le déblocage des fonctions de couplage éventuellement présentes dans le polymère pour permettre son couplage ultérieur avec le métal.

Les conditions de ce traitement thermique seront fonction de la composition de la préparation de dépôt du polymère de couplage. Par exemple, en utilisant une préparation aqueuse de dépôt de polymère et des agents de couplage de type silanes porteurs de fonctions alcoxy, -C(O)OH ou -C(O)OR" avec R" qui représente un groupe alkyle, ou de type silanes porteurs de fonctions amine ou époxy pour réagir avec le polymère, qui ont conduit à la formation du polymère de couplage dans la préparation de dépôt, un traitement thermique à une température de 100 à 170°C, pendant 30 secondes à 2 minutes, est adapté.

L'opération de métallisation sur la surface du textile recouverte de polymère est alors réalisée selon toute technique connue, et de préférence par dépôt métallique sous pression réduite à partir de vapeurs de métal, classiquement nommé dépôt métallique sous vide. Ce dépôt métallique sera le plus souvent réalisé sur une seule des faces du textile. Ainsi, dans un tel cas, lorsque le dépôt du polymère de couplage aura été réalisé sur toute la surface du textile (c'est notamment le cas par imprégnation dans un bain), l'une des grandes faces du textile sera recouverte de polymère de couplage et l'autre grande face sera recouverte de polymère de couplage, lui-même recouvert d'une couche de métal. Classiquement, une pression appartenant à la gamme allant de 10⁻² à 10⁻⁴ Torr et une température appartenant à la gamme allant de 30 à 100°C seront appliquées lors de la métallisation. La pression et la température seront adaptées par l'homme du métier, en fonction du métal utilisé. Lors de cette métallisation, les fonctions de couplage restantes sur la couche polymérique vont former des liaisons chimiques avec le métal. Il y aura ainsi une parfaite cohésion entre le support textile et la couche métallique, assurée par la couche polymérique intermédiaire. On obtient ainsi une couche métallique généralement de 5 à 100nm d'épaisseur. Au final, le textile métallisé obtenu est, le plus souvent, composé de :
5 à 7 parts massiques de polymère de couplage ;
0 à 3 parts massiques d'agent ignifugeant ;
≤ 0,5 part massique de métal constitutif de la couche métallique ; en particulier le métal sera présent à raison de 0,01 à 0,5 part massique ;
90 à 95 parts massiques de fibres inorganiques constitutives de la couche textile, pour 100 parts.

L'invention pourra être mise en oeuvre, notamment, pour la réalisation de textiles pour la protection solaire, et notamment de tissus pour store ou rideau. La couche métallique est parfaitement liée au textile. De plus, la présence d'agent(s) ignifugeant(s) et le faible taux de composante organique apportée par ce traitement permettront également de garantir les propriétés « non feu » requises.

Préalablement au procédé de traitement mis en oeuvre dans le cadre de l'invention, le textile aura pu subir une opération de teinture, par traitement avec une formulation de teinture. Une telle formulation se présente, en général, sous la forme d'une dispersion de matières colorantes dans une dispersion d'un liant en phase aqueuse. L'extrait sec de cette formulation est le plus souvent inférieur à 10% en masse, ce qui conduit à une couche textile comprenant 0,5 à 1% d'extrait sec de formulation de teinture, laissant accessible les fibres inorganiques pour la liaison avec le polymère de couplage. Néanmoins, dans le cas d'une teinture préalable, le polymère de couplage pourra également réaliser des liaisons avec le liant de la teinture présent localement en surface de la couche textile. Par ailleurs, le tissu métallisé obtenu dans le cadre de l'invention pourra être traité par dépôt d'un vernis à la surface de la couche métallisée, notamment afin d'éviter son oxydation et/ou sa corrosion. De tels vernis sont notamment, du type polyuréthane, polyacrylique, polyvinylique, silicone ou époxy. Un tel vernis lorsqu'il est appliqué sur la couche métallisée représentera en général moins de 1% de la masse totale du textile final, et en général de 0,2 à 0,6%. De telles opérations pourront être réalisées selon les techniques classiques, bien connues de l'homme du métier, notamment fabriquant de textiles pour la protection solaire.

Les exemples ci-après permettent d'illustrer l'invention.

### Exemple 1 de traitement

### - Composition du bain

| Type de matière première | Nature chimique Référence commerciale | Pourcentage Pondéral |
|---|---|---|
| Liant polymère | polyuréthane BAYER Impranil® DLN | 45,90 |
| Agent de couplage | 3-glycidoxypropylméthyldiéthoxysilane MOMENTIVE Coatosil® C2287 | 0,70 |
| Ignifugeant | ignifugeant phosphoré azoté THOR PCO 900 | 5,00 |
| Agent anti-mousse | poly diméthyl siloxane BYK Chemie Byk 094 | 0,10 |
| Milieu dispersif | Eau | 48,30 |
| TOTAL | | 100,00 |

La préparation de dépôt est préparée en additionnant successivement dans la quantité d'eau nécessaire et maintenue sous agitation, du BYK 094, de l'impranil® DLN et du Coatosil® C 2287. L'agitation est alors maintenue pendant 48 h sous une vitesse 300 tr/mn (création d'un vortex). Le pH est contrôlé à t=0, t= 24h puis t=48h : le ph doit augmenter d'une unité de pH (minimum) au bout de 48h, ce qui est significatif du pontage du polyuréthane avec le silane.

Une fois cette étape réalisée, le PCO 900 est ajouté progressivement dans la préparation précédemment obtenue, sous une vitesse d'agitation de 300 tr/min pendant 1 heure.

Le mélange peut alors être appliqué sur le tissu à traiter.

### Exemple 2 de traitement

Le traitement est appliqué sur un tissu ayant au préalable reçu une teinture.

La teinture possède la composition suivante :

| Type de matière première | Nature chimique Référence commerciale | Pourcentage Pondéral |
|---|---|---|
| Agent mouillant | Non ionique CLARIANT Hostapal NAN | 0,50 |
| Agent antimousse | HUNTSMAN Albaflow FF01 | 0,5 |
| Liant polymère | Poly hydroxyl éther INCHEMREZ PKHW38 | 12 |
| Milieu | Eau | 87,45 |
| TOTAL | | 100,00 |
| Colorant(s) | Selon la teinte recherchée | < 5 |

Le dépôt sec de teinture sur le tissu est de l'ordre de 1 à 2 g/m², soit 0,5 à 1 % du poids du tissu obtenu après teinture.

Le tissu ainsi obtenu reçoit ensuite un traitement identique à celui décrit dans l'exemple 1.

### Exemple 3 de traitement

### - Composition du bain 1 (hydrolyse du silane : Coatosil® MP 200)

| Type de matière première | Nature chimique Référence commerciale | Pourcentage Pondéral |
|---|---|---|
| Agent de couplage | 3-glycidoxypropylméthyldiéthoxysilane MOMENTIVE Coatosil® MP 200 | 30 |
| Acide | Solution d'acide acétique (90% eau / 10% acide acétique en masse) | 10 |
| Milieu dispersif | Eau | 60 |
| TOTAL | | 100,00 |

### Mode opératoire :

Le Coatosil® MP 200 est introduit dans le contenant prévu à cet effet (ex fut en pastique). La solution eau /acide acétique est ajoutée sous agitation, sous mélange pendant 10min à une vitesse de 200 tr /min. 10% de l'eau sont ajoutés progressivement (2% par 2%) sous agitation, puis 10% d'eau, puis le restant d'eau (40%), en maintenant l'agitation. L'agitation est maintenue pendant 3 heures avec un contrôle du pH. Ce dernier est voisin de 3 (mettant en évidence l'hydrolyse du Coatosil® MP 200)

Après hydrolyse du Coatosil® MP 200, un composé de formule suivante est obtenu :

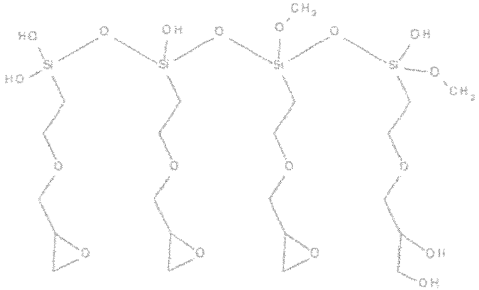

### - Composition du bain 2 (Préparation de dépôt)

| Type de matière première | Nature chimique Référence commerciale | Pourcentage Pondéral |
|---|---|---|
| Liant polymère | polyuréthane BAYER Impranil® DLN | 45,90 |
| Agent de couplage | 3-glycidoxypropylméthyldiéthoxysilane MOMENTIVE Coatosil® MP 200 (ES : 30%) - mélange 1 | 2,4 |
| Ignifugeant | ignifugeant phosphoré azoté THOR PCO 960 | 5,00 |
| Agent anti-mousse | poly diméthyl siloxane BYK Chemie Byk 094 | 0,10 |
| Milieu dispersif | Eau | 46,60 |
| TOTAL | | 100,00 |

La préparation de dépôt est préparée comme à l'exemple 1.

### - Conditions de traitement

∘ Vitesse d'agitation lors de la préparation du bain : 450 tr/min
∘ Type de pale : rotor / stator
∘ Maturation du bain : de 48h
∘ Type de traitement de la surface textile :
   ▪ Plein bain puis essorage au foulard
   ▪ Pression de fermeture des cylindres du foulard : 16 N/mm
   ▪ Température du bain : 16°C
   ▪ Vitesse de traitement : 12 m/min

### - Traitement thermique : 160°C - 1min 20 s

### - Métallisation sous vide

∘ Métallisation sous vide réalisée 7 jours après le traitement du tissu
∘ Procédé en 3 étapes :
   ▪ Séchage du tissu : 105°C - 2 min
   ▪ Traitement plasma : température du plasma 900 - 1000 °C - temps de traitement < 1s
   ▪ Métallisation sous vide : P° : 10⁻³ Torr

### - Caractérisation des tissus

∘ Poids du tissu avant traitement : 149 g/m²
∘ Poids du tissu traité : 160 g/m²
∘ Epaisseur du produit fini : 0,21 mm
∘Comportement au feu : M0 selon la norme NFP 92507 -classement « EUROCLASSE » selon la norme EN 13.501-1 : A2s1d0 dans les deux cas.

Une fois la métallisation effectuée, un vernis de protection a également été appliqué sur le tissu obtenu conformément à l'exemple 1. Ce dernier permet d'éviter tout phénomène de corrosion/oxydation de l'aluminium et donc une perte des performances du tissu pour les propriétés thermiques /optiques. Le vernis est appliqué par le procédé foulardage (imprégnation plein bain).

La composition du vernis est la suivante :

| **Matière première** | **% massiques formule** |
|---|---|
| Eau | 89,95 |
| Impranil® DLN Polyuréthane (40%) | 10 |
| Byk 094 polydiméthyl siloxane (100%) | 0,05 |
| **TOTAL** | 100 |

Le dépôt sec de vernis sur le tissu est de 0,5g/m², soit 0,3% massique du tissu final.

### Mesure de Rs (sur une gamme de longueur d'ondes de 250 nm à 2500 nm)

| | **Avant vernis** | **Après vernis** |
|---|---|---|
| Rs (%) | 73,4 | 70 |

### Propriétés au feu

Le vernis apposé sur le tissu ne dégrade pas les propriétés au feu. L'apport en matière organique sur le tissu est quasiment négligeable, ce qui permet de conserver le classement feu M0 et A2s1d0.

## Revendications

1. Textile métallisé sur au moins l'une de ses faces comportant une couche textile de fibres inorganiques et une couche métallique, **caractérisé en ce que** la liaison entre la couche textile et la couche métallique est assurée par une couche intermédiaire polymérique formée d'une matrice comportant au moins un polymère de couplage dans laquelle est réparti au moins un agent ignifugeant, ledit polymère de couplage étant lié par liaisons chimiques, d'une part à la couche textile et, d'autre part à la couche métallique.

2. Textile métallisé selon la revendication 1 **caractérisé en ce que** les liaisons chimiques existant, d'une part entre le polymère de couplage et la couche textile et, d'autre part entre le polymère de couplage et la couche métallique, sont des liaisons covalentes, hydrogène ou polaires.

3. Textile métallisé selon la revendication 1 ou 2 **caractérisé en ce que** le textile est un tissu, un non-tissé ou une grille, en fibres de verre.

4. Textile métallisé selon l'une quelconque des revendications 1 à 3 **caractérisé en ce que** le métal constitutif de la couche métallique est de l'aluminium.

5. Textile métallisé selon l'une quelconque des revendications 1 à 4 **caractérisé en ce que** les liaisons chimiques existant, d'une part entre le polymère de couplage et la couche textile et, d'autre part entre le polymère de couplage et la couche métallique, sont assurées par l'intermédiaire de fonctions M-OH portées par la couche polymérique ou de ponts covalents O-M-O, avec M = Al, Zr, Ti ou, de préférence, Si.

6. Textile métallisé selon l'une quelconque des revendications 1 à 5 **caractérisé en ce que** la couche intermédiaire polymérique est constituée d'un ou plusieurs polymères à fonctions réactives, notamment choisies parmi les groupements monovalents ou divalents ci-après : hydroxy, adde carboxylique, amine, amide, anhydride d'acide, isocyanate, époxy, caprolactame, carbodiimide.

7. Textile métallisé selon l'une quelconque des revendications 1 à 6 **caractérisé en ce que** la couche intermédiaire polymérique est en un polymère choisi parmi : les polyesters, polyamides, polyuréthanes, polyoléfines et leurs mélanges.

8. Textile métallisé selon l'une quelconque des revendications 1 à 7 **caractérisé en ce que** le ou les agent(s) ignifugeant(s) représente(nt) de 20 à 25% en masse de la masse de la couche polymérique.

9. Textile métallisé selon l'une quelconque des revendications 1 à 8 **caractérisé en ce que** le polymère de couplage représente de 1 à 25 %, et de préférence de 5 à 6 %, en masse de la masse totale du textile métallisé.

10. Textile métallisé selon l'une quelconque des revendications 1 à 9 **caractérisé en ce qu'**il présente un indice Rs, déterminé par la norme EN 410, supérieur ou égal à 70%.

11. Textile métallisé selon l'une quelconque des revendications 1 à 10 **caractérisé en ce que** la couche métallique est recouverte d'un vernis afin d'éviter son oxydation et/ou sa corrosion, représentant moins de 1% massique de masse du textile.

12. Procédé de fabrication d'un textile métallisé selon l'une quelconque des revendications 1 à 11 **caractérisé en ce qu'**il comprend les étapes successives suivantes :
a) Préparation d'une solution ou d'une dispersion comportant au moins un agent ignifugeant et un polymère de couplage ou un mélange de polymères de couplage, le(s)dit(s) polymère(s) étant porteur(s) de fonctions de couplage capables de réaliser des liaisons chimiques entre le polymère et les fibres textiles inorganiques et des fonctions de couplage capables de réaliser des liaisons chimiques entre le polymère et le métal, ces fonctions pouvant être identiques ou différentes,
b) Ensimage de l'une des faces de la couche textile de fibres inorganiques avec la solution ou dispersion préparée à l'étape a),
c) Application d'un traitement thermique permettant notamment de fixer chimiquement le polymère de couplage à la surface de la couche textile, de manière à fixer une couche de polymère intermédiaire sur la couche textile,
d) Métallisation, par dépôt de vapeurs de métal sous pression réduite, d'au moins une partie de la surface précédemment traitée, entraînant la formation de liaisons chimiques entre la couche de polymère intermédiaire et la couche métallique formée.

13. Procédé selon la revendication 12 **caractérisé en ce que** la solution ou dispersion préparée à l'étape a) est réalisée avec de 1 à 10% d'agent(s) de couplage, 50 à 80% de polymère(s) à fonctions réactives, de 5 à 40% d'agent(s) ignifugeant(s) et de 0,1 à 10% d'agent(s) de formulation, ces pourcentages étant donnés sur l'extrait sec, par rapport à la masse totale de l'extrait sec correspondant à la solution ou dispersion préparée.

14. Procédé selon la revendication 13 **caractérisé en ce que** le ou les agent(s) de couplage est (sont) choisi(s) parmi les silanes, titanates, zirconates, aluminates et complexes orgonochromés.

15. Procédé selon la revendication 13 ou 14 **caractérisé en ce que** le(s) agent(s) de couplage est (sont) choisi(s) parmi les organosilanes porteurs de une à trois fonctions OH ou alcoxy, et d'au moins une partie organique R possédant une fonction permettant leur greffage covalent sur le polymère à fonctions réactives.

16. Procédé selon l'une quelconque des revendications 12 à 15 **caractérisé en ce que** l'étape d) est suivie d'une étape de dépôt d'un vernis à la surface de la couche métallisée, afin d'éviter son oxydation et/ou sa corrosion.

17. Procédé selon l'une quelconque des revendications 12 à 16 **caractérisé en ce que** l'étape b) est précédée d'une opération de teinture de la couche textile, laissant accessible les fibres textiles de la couche textile pour la liaison avec le polymère de couplage, ladite opération de teinture étant de préférence réalisée par traitement de la couche textile avec une formulation de teinture conduisant à une couche textile comprenant 0,5 à 1% en extrait sec de la formulation de teinture.

## Patentansprüche

1. Textil, das auf mindestens einer seiner Flächen metallisiert ist, umfassend eine Textilschicht aus anorganischen Fasern und eine Metallschicht, **dadurch gekennzeichnet, dass** die Verbindung zwischen der Textilschicht und der Metallschicht durch eine polymere Zwischenschicht gewährleistet wird, die aus einer Matrix gebildet ist, die mindestens ein Kupplungspolymer umfasst, in dem mindestens ein Flammschutzmittel verteilt ist, wobei das Kupplungspolymer durch chemische Bindungen einerseits an die Textilschicht und andererseits an die Metallschicht gebunden ist.

2. Metallisiertes Textil gemäß Anspruch 1, **dadurch gekennzeichnet, dass** es sich bei den chemischen Bindungen, die einerseits zwischen dem Kupplungspolymer und der Textilschicht und andererseits zwischen dem Kupplungspolymer und der Metallschicht bestehen, um kovalente, Wasserstoff- oder polare Bindungen handelt.

3. Metallisiertes Textil gemäß Anspruch 1 oder 2, **dadurch gekennzeichnet, dass** das es sich bei dem Textil um ein Glasfasergewebe, -vlies oder -gitter handelt.

4. Metallisiertes Textil gemäß einem der Ansprüche 1 bis 3, **dadurch gekennzeichnet, dass** es sich bei dem die Metallschicht bildenden Metall um Aluminium handelt.

5. Metallisiertes Textil gemäß einem der Ansprüche 1 bis 4, **dadurch gekennzeichnet, dass** die chemischen Bindungen, die einerseits zwischen dem Kupplungspolymer und der Textilschicht und andererseits zwischen dem Kupplungspolymer und der Metallschicht bestehen, mit Hilfe von M-OH-Funktionen gewährleistet sind, die von der Polymerschicht oder von kovalenten O-M-O-Brücken mit M = Al, Zr, Ti oder bevorzugt Si getragen werden.

6. Metallisiertes Textil gemäß einem der Ansprüche 1 bis 5, **dadurch gekennzeichnet, dass** die polymere Zwischenschicht aus einem oder mehreren Polymeren mit reaktiven Funktionen besteht, insbesondere ausgewählt aus den folgenden ein- oder zweiwertigen Gruppen: Hydroxy, Carbonsäure, Amin, Amid, Säureanhydrid, Isocyanat, Epoxy, Caprolactam, Carbodiimid.

7. Metallisiertes Textil gemäß einem der Ansprüche 1 bis 6, **dadurch gekennzeichnet, dass** die polymere Zwischenschicht aus einem Polymer hergestellt ist, das ausgewählt ist aus: Polyestern, Polyamiden, Polyurethanen, Polyolefinen und Mischungen davon.

8. Metallisiertes Textil gemäß einem der Ansprüche 1 bis 7, **dadurch gekennzeichnet, dass** das/die Flammschutzmittel 20 bis 25 Gew.-% der Polymerschicht ausmacht (ausmachen).

9. Metallisiertes Textil gemäß einem der Ansprüche 1 bis 8, **dadurch gekennzeichnet, dass** das Kupplungspolymer 1 bis 25 Gew.-% und bevorzugt 5 bis 6 Gew.-% der Gesamtmasse des metallisierten Textils ausmacht.

10. Metallisiertes Textil gemäß einem der Ansprüche 1 bis 9, **dadurch gekennzeichnet, dass** es einen durch die Norm EN 410 bestimmten Rs-Index von mindestens 70% aufweist.

11. Metallisiertes Textil gemäß einem der Ansprüche 1 bis 10, **dadurch gekennzeichnet, dass** die Metallschicht mit einem Lack überzogen ist, um deren Oxidation und/oder Korrosion zu vermeiden, wobei dieser weniger als 1 Gew.-% des Textils ausmacht.

12. Verfahren zur Herstellung eines metallisierten Textils gemäß einem der Ansprüche 1 bis 11, **dadurch gekennzeichnet, dass** es die folgenden aufeinanderfolgenden Schritte umfasst:
a) Herstellen einer Lösung oder Dispersion, umfassend mindestens ein Flammschutzmittel und ein Kupplungspolymer oder eine Mischung von Kupplungspolymeren, wobei das (die) Polymer(e) Kupplungsfunktionen, die chemische Bindungen zwischen dem Polymer und den anorganischen Textilfasern ausführen können, und Kupplungsfunktionen, die chemische Bindungen zwischen dem Polymer und dem Metall ausführen können, aufweist (aufweisen), wobei diese Funktionen gleich oder verschieden sein können,
b) Schlichten einer Seite der Textilschicht aus anorganischen Fasern mit der in Schritt a) hergestellten Lösung oder Dispersion,
c) Anwenden einer Wärmebehandlung, insbesondere zur chemischen Fixierung des Kupplungspolymers auf der Oberfläche der Textilschicht, so dass eine Polymerzwischenschicht auf der Textilschicht fixiert wird,
d) Metallisieren durch Aufbringen von Metalldämpfen unter vermindertem Druck auf mindestens einen Teils der zuvor behandelten Oberfläche, wodurch chemische Bindungen zwischen der Polymerzwischenschicht und der gebildeten Metallschicht entstehen.

13. Verfahren gemäß Anspruch 12, **dadurch gekennzeichnet, dass** die in Schritt a) hergestellte Lösung oder Dispersion mit 1 bis 10 % Kupplungsmittel(n), 50 bis 80 % Polymer(en) mit reaktiven Funktionen, 5 bis 40 % Flammschutzmittel(n) und 0,1 bis 10 % Formulierungsmittel(n) ausgeführt wird, wobei diese Prozentsätze für den Trockenextrakt angegeben sind, bezogen auf die Gesamtmasse des Trockenextrakts, die der hergestellten Lösung oder Dispersion entspricht.

14. Verfahren gemäß Anspruch 13, **dadurch gekennzeichnet, dass** das (die) Kupplungsmittel ausgewählt ist (sind) aus Silanen, Titanaten, Zirkonaten, Aluminaten und orgonochromen Komplexen.

15. Verfahren gemäß Anspruch 13 oder 14, **dadurch gekennzeichnet, dass** das (die) Kupplungsmittel ausgewählt ist (sind) aus Organosilanen, die eine bis drei OH- oder Alkoxy-Funktionen tragen, und mindestens einem organischen Teil R, der eine Funktion aufweist, die deren kovalente Pfropfung auf das Polymer mit reaktiven Funktionen ermöglicht.

16. Verfahren gemäß einem der Ansprüche 12 bis 15, **dadurch gekennzeichnet, dass** auf den Schritt d) ein Schritt des Aufbringens eines Lackes auf die Oberfläche der metallisierten Schicht folgt, um deren Oxidation und/oder Korrosion zu vermeiden.

17. Verfahren gemäß einem der Ansprüche 12 bis 16, **dadurch gekennzeichnet, dass** Schritt b) ein Färbevorgang der Textilschicht vorausgeht, wobei die Textilfasern der Textilschicht für die Bindung mit dem Kupplungspolymer zugänglich bleiben, wobei der Färbevorgang bevorzugt durch Behandlung der Textilschicht mit einer Färbeformulierung durchgeführt wird, die zu einer Textilschicht führt, die 0,5 bis 1% Trockenextrakt der Färbeformulierung umfasst.

## Claims

1. Textile metallized on at least one of its faces comprising a textile layer of inorganic fibers and a metallic layer, **characterized in that** the connection between the textile layer and the metallic layer is provided by a polymeric intermediate layer formed by a matrix having at least one coupling polymer in which at least one flame retardant agent is distributed, said coupling polymer being bonded by chemical bonds on the one hand to the textile layer and on the other hand to the metallic layer.

2. Metallized textile according to claim 1, **characterized in that** the chemical bonds existing on the one hand between the coupling polymer and the textile layer, and on the other hand between the coupling polymer and the metallic layer, are covalent, hydrogen, or polar bonds.

3. Metallized textile according to claim 1 or claim 2, **characterized in that** the textile is a woven fabric, a non-woven fabric or a grid, of glass fibers.

4. Metallized textile according to any one of claims 1 to 3, **characterized in that** the metal constituting the metallic layer is aluminum.

5. Metallized textile according to any one of claims 1 to 4, **characterized in that** the chemical bonds existing on the one hand between the coupling polymer and the textile layer, and on the other hand between the coupling polymer and the metal layer, are provided by M-OH functions carried by the polymeric layer or by O-M-O covalent bridges, where M = Al, Zr, Ti, or preferably Si.

6. Metallized textile according to any one of claims 1 to 5, **characterized in that** the polymeric intermediate layer is constituted by one or more polymers having reactive functions, in particular selected from the following monovalent or divalent groups: hydroxy, carboxylic acid, amine, amide, acid anhydride, isocyanate, epoxy, caprolactam, carbodimide.

7. Metallized textile according to any one of claims 1 to 6, **characterized in that** the polymeric intermediate layer is a polymer selected from: polyesters, polyamides, polyurethanes, polyolefins, and mixtures thereof.

8. Metallized textile according to any one of claims 1 to 7, **characterized in that** the flame retardant agent(s) represent(s) 20% to 25% by weight of the weight of the polymeric layer.

9. Metallized textile according to any one of claims 1 to 8, **characterized in that** the coupling polymer represents 1% to 25%, and preferably 5% to 6%, by weight of the total weight of the metallized textile.

10. Metallized textile according to any one of claims 1 to 9, **characterized in that** it presents an Rs index, determined using the EN 410 standard, greater than or equal to 70%.

11. Metallized textile according to any one of claims 1 to 10, **characterized in that** the metallic layer is covered with a varnish in order to avoid its oxidation and/or corrosion, representing less than 1% by weight of the weight of the textile.

12. Method of manufacturing a metallized textile according to any one of claims 1 to 11, **characterized in that** it comprises the following successive steps:
a) preparing a solution or a dispersion including at least one flame retardant agent and a coupling polymer or a mixture of coupling polymers, said polymer(s) carrying coupling functions capable of making chemical bonds between the polymer and the inorganic textile fibers, and coupling functions capable of making chemical bonds between the polymer and the metal, which functions may be identical or different;
b) sizing one of the faces of the inorganic fiber textile layer with the solution or dispersion prepared in step a);
c) applying heat treatment serving in particular to chemically fix the coupling polymer to the surface of the textile layer so as to fix an intermediate polymeric layer on the textile layer;
d) metallizing at least a portion of the previously treated surface by depositing metal vapor under low pressure, thereby forming chemical bonds between the intermediate polymeric layer and the formed metal layer.

13. Method according to claim 12, **characterized in that** the solution or dispersion prepared in step a) is made with 1% to 10% of coupling agent(s), 50% to 80% of polymer(s) with reactive functions, 5% to 40% of flame retardant agent(s), and 0.1% to 10% of formulation agent(s), these percentages being given for dry matter relative to the total weight of the dry matter corresponding to the prepared solution or dispersion.

14. Method according to claim 13, **characterized in that** the coupling agent(s) is (are) selected from silanes, titanates, zirconates, aluminates, and organochromium complexes.

15. Method according to claim 13 or claim 14, **characterized in that** the coupling agent(s) is (are) selected from organosilanes carrying one to three OH or alkoxy functions, and at least an organic moiety R having a function enabling them to be covalently grafted to the polymer having reactive functions.

16. Method according to any one of claims 12 to 15, **characterized in that** step d) is followed by a step of depositing a varnish on the surface of the metallized layer in order to avoid its oxidation and/or corrosion.

17. Method according to any one of claims 12 to 16, characterized it that step b) is preceded by an operation of dyeing the textile layer, leaving the textile fibers of the textile layer accessible for bonding with the coupling polymer, said dyeing operation preferably being performed by treating the textile layer with a dyeing formulation leading to a textile layer including 0.5% to 1% dry matter of the dye formulation.
